Europäisches Patentamt

European Patent Office

Office européen des brevets

(11) Publication number : **0 488 606 A1**

# EUROPEAN PATENT APPLICATION

(21) Application number : **91310793.4**

(22) Date of filing : **22.11.91**

(51) Int. Cl.$^5$ : **A01N 43/80**, B27K 3/50, A01N 37/02

(30) Priority : **27.11.90 US 619284**

(43) Date of publication of application :
**03.06.92 Bulletin 92/23**

(84) Designated Contracting States :
**AT BE CH DE DK ES FR GB GR IT LI LU NL SE**

(71) Applicant : **ROHM AND HAAS COMPANY**
**Independence Mall West**
**Philadelphia Pennsylvania 19105 (US)**

(72) Inventor : **Sherba, Samuel Eugene**
**41 Montclair Lane**
**Willingboro, New Jersey 08046 (US)**
Inventor : **Mehta, Raj J.**
**65 Tapovan Society, Ambawadi**
**Ahmedabad-15, Gujarat (IN)**

(74) Representative : **Smith, Julian Philip Howard et al**
**Rohm and Haas (UK) Limited, European Operations Patent Dept., Lennig House, 2 Masons Avenue**
**Croydon CR9 3NB (GB)**

(54) Antimicrobial compositions comprising fatty acids and isothiazolones.

(57) A synergistic antimicrobial composition comprising 4,5-dichloro-2-n-octyl-3-isothiazolone and a fatty acid compound of the formula $C_nH_{2n+1}CO_2H$ where n is an integer from 2 to 9, in a ratio to each other which exhibits synergism is disclosed.

EP 0 488 606 A1

The present invention concerns antimicrobial compositions and methods of controlling bacteria, fungi and algae.

The presence of microbes in various aqueous systems such as latices, paints, coatings, cooling water systems, decorative ponds and the like, can cause deterioration or disfigurement of these systems. For example, painted surfaces may be disfigured by the unsightly buildup of microbes, thus detracting from the overall aesthetics of the painted article; cooling towers may lose efficiency due to the buildup of microbes on surfaces, thus reducing the heat transfer capabilities of the tower. It is conventional to practice methods which inhibit the microbial deterioration of such systems by incorporating a variety of additives or combination of additives that are characterized by having antimicrobial activity.

A wide variety of materials have been used to control microbes in different environments, some of which are: chlorine/bromine compounds, glutaraldehyde, isothiazolones, organotin formulations, copper salts, quaternary ammonium compounds (SD Strauss and PR Puckorius in *J. Power*, S1, June 1984), and triazines. Each has deficiencies related to toxicity, pH and temperature sensitivity, limited effectiveness, chemical stability, and/or compatibility.

Different fatty acids have been found to have widely different antimicrobial properties. Based on the aforementioned performance deficiencies of conventional antimicrobial compounds there is a need for more effective antimicrobial agents that can be used at lower dosage rates, thus being more cost effective for the end user, reducing the pollution load on the affected environmental systems, and reducing the side effects to nearby non-target organisms, such as fish, useful crops, etc.

In a first aspect the invention provides a composition comprising 4,5 dichloro-2-n-octyl-3-isothiazolone and a fatty acid compound of the formula $C_nH_{2n+1}CO_2H$ where n is an integer from 2 to 9 in a ratio of from 0.001:100 to 10:100, preferably from 0.01:100 to 1:100.

In another aspect, the invention comprises a method of inhibiting or preventing the growth of bacteria, fungi, or algae in a locus subject or susceptible to contamination thereby, which comprises incorporating onto or into the locus, in an amount which is effective to adversely affect said growth, the above composition.

The preferred fatty acids are $(C_3-C_{10})$aliphatic acids, e.g., propionic, butyric, octanoic and decanoic acids.

Another important utility is in imparting microbial resistance to a coating or an impregnant composition comprising incorporation of the composition of the invention in the coating or impregnant, preferably at a concentration of about 0.1 ppm to about 2 percent, more preferably at a concentration of about 1 ppm to 1 percent, and most preferably at a concentration of about 10 to 4000 ppm.

In a marine antifoulant composition, on the other hand, the antimicrobial composition of the invention comprises about 1 to 10 percent of the antifoulant composition.

In a therapeutic pharmaceutical formulation, e.g., lotion, cream, ointment or topical treatment; in the treatment of metal working fluids; and in the protection of fabric, leather, paper or wood materials, the microbicidal composition is preferably added at a concentration of from about 0.1 ppm to about 2 percent by weight. In aqueous media, the microbicidal composition preferably comprises from about 0.1 ppm to about 1 percent of the aqueous system depending on the specific end use; for example, in cooling water tower applications and with pulp or paper manufacturing processes, the microbicidal composition is generally added at a concentration from about 0.1 to about 1000 ppm by weight. In cosmetic formulations, e.g., face or hand creams, toiletries, etc.; and in the treatment of fuel systems, e.g., jet fuel, gasoline, heating oil, etc., the microbicidal composition is generally added at a concentration of from about 0.1 ppm to about 1 percent by weight.

The microbial resistant compositions can also be used in construction products such as stucco, roof mastics, wall mastics, and masonry coatings for algae protection; in clear finishes and coatings to protect underlying substrates from algae; for algae control in aquaculture, including aquaria, fish hatcheries, shrimp ponds, finfish ponds, mollusc and crustacean cultivation; for algae control in recreational and decorative bodies of water such as swimming pools, lakes, fountains and decorative ponds; for algae control in bodies of water for industrial or municipal use, such as settling or separation ponds, waste treatment ponds, and water reservoirs; for algae control in hydroponic farming; for algae control in processing and manufacture of pulp and paper products; for inclusion in plastics or in coatings for plastics to protect against algae; and in plastics or coatings for plastics for swimming pool liners.

Compositions are preferred wherein the weight ratio of isothiazolone to fatty acid is about 0.001:100 to about 10:100. A particularly preferred ratio range is from about 0.01:100 to about 1:100 by weight.

The following examples represent just a few of the many uses and compounds of the invention. They are intended to be illustrative but not limiting.

## EXAMPLES

### A. General Procedure

MIC values represent the Minimum Inhibitory Concentration. This is defined as the lowest level of compound required to completely inhibit (repress) the growth of a given organism.

A synergistic effect is defined as the response of two variables which is greater than the sum of both parts alone. Synergy was determined from combination studies with two compounds by the method of calculation described by F. C. Kull, P. C. Eisman, H. D. Sylwestrowicz and R. K. Mayer, *Applied Microbiology* 9,538 (1961):

$$\frac{Q_a}{Q_A} + \frac{Q_b}{Q_B} = \text{synergism index} \quad (SI)$$

where:

$Q_A$ = quantity of compound A, acting alone, producing an end point (MIC)

$Q_a$ = quantity of compound A, in mixture, producing an end point (MIC)

$Q_B$ = quantity of compound B, acting alone, producing an end point (MIC)

$Q_b$ = quantity of compound B, in mixture, producing an end point (MIC)

The following SI values may be attained:

SI > 1 represents antagonistic effect,

SI = 1 represents additive effect,

SI < 1 represents synergy.

Efficacy studies were conducted on a variety of microorganisms with fatty acids and isothiazolone mixtures. The MIC studies were conducted using microtiter plate assays. In this method, a wide range of concentrations was tested by preparing two-fold serial dilutions of the compound in 96-well plastic microtiter plates. All liquid media transfers were performed with calibrated single or multichannel digital pipetters. Stock solutions of compounds were prepared in appropriate solvents and dispensed to the growth medium. All subsequent dilutions in plates were made using the desired growth medium; total volume of liquid in each well was 100 µl. Each plate contained a concentration of both compounds made by serially titrating equal volumes of liquids in two directions in the microtiter plate. Each plate contained a control row for each combination (one component only), hence, the individual compound MIC values were also determined.

### B. Isothiazolone Structure

Isothiazolones included in the examples are designated as follows:

1) Isothiazolone A: 4,5-dichloro-2-n-octyl-3-isothiazolone

2) Isothiazolone B: 2-n-octyl-3-isothiazolone (comparative)

### C. Fatty Acid Structure

Fatty acids included in the examples are: butyric, propionic, octanoic, decanoic, oleic, linoleic plus salts and esters of some fatty acids.

### EXAMPLE 1

Using a pure culture of *Aspergillus niger*, various combinations of propionic acid and Isothiazolone A were subjected to MIC determinations in mycophil broth. Compound A is Isothiazolone A and Compound B is propionic acid.

| Qa | Qb | Qa/Qb | SI |
|---|---|---|---|
| 0 | 2000 ($Q_B$) | - | 1.0 |
| 0.16 | 1000 | 1/6250 | 0.56 |
| 0.32 | 1000 | 1/3120 | 0.63 |
| 0.32 | 500 | 1/1560 | 0.38 |
| 0.64 | 1000 | 1/1560 | 0.76 |
| 0.64 | 500 | 1/780 | 0.51 |
| 1.25 | 500 | 1/400 | 0.75 |
| 1.25 | 250 | 1/200 | 0.63 |
| 2.5 ($Q_A$) | 0 | - | 1.0 |

## EXAMPLE 2

Using a pure culture of *Aspergillus niger*, various combinations of butyric acid and Isothiazolone A were subjected to MIC determinations in mycophil broth. Compound A is Isothiazolone A and Compound B is butyric acid.

| Qa | Qb | Qa/Qb | SI |
|---|---|---|---|
| 0 | 2000 ($Q_B$) | - | 1.0 |
| 0.32 | 1000 | 1/3120 | 0.63 |
| 0.64 | 1000 | 1/1560 | 0.76 |
| 0.64 | 500 | 1/780 | 0.51 |
| 1.25 | 500 | 1/400 | 0.75 |
| 1.25 | 250 | 1/200 | 0.63 |
| 1.25 | 125 | 1/99 | 0.56 |
| 2.5 ($Q_A$) | 0 | - | 1.0 |

## EXAMPLE 3

Using a pure culture of *Aspergillus niger*, various combinations of octanoic acid and Isothiazolone A were subjected to MIC determinations in mycophil broth. Compound A is Isothiazolone A and Compound B is octanoic acid.

| Qa | Qb | Qa/Qb | SI |
|---|---|---|---|
| 0 | 2000 ($Q_B$) | - | 1.0 |
| 0.32 | 1000 | 1/3120 | 0.63 |
| 0.64 | 500 | 1/780 | 0.51 |
| 2.5 ($Q_A$) | 0 | - | 1.0 |

## EXAMPLE 4

Using a pure culture of *Aspergillus niger*, various combinations of decanoic acid and Isothiazolone A were subjected to MIC determinations in mycophil broth. Compound A is Isothiazolone A and Compound B is decanoic acid.

| Qa | Qb | Qa/Qb | SI |
|---|---|---|---|
| 0 | >2000 (Q$_B$) | - | 1.0 |
| 0.16 | 2000 | 1/12500 | <0.63 |
| 0.32 | 2000 | 1/6250 | <0.76 |
| 0.64 | 1000 | 1/1560 | <0.75 |
| 1.25 (Q$_A$) | 0 | - | 1.0 |

**EXAMPLE 5 (Comparative)**

Using a pure culture of *Aspergillus niger*, various combinations of either oleic acid, linoleic acid, sodium benzoate, calcium propionate, sodium oleate or ethyl oleate were subjected to MIC determinations in mycophil broth with Isothiazolone A. Under the conditions of the test method, none of the above combinations showed synergy. In fact some combinations were antagonistic.

**EXAMPLE 6 (Comparative)**

Using a pure culture of *Aspergillus niger*, various combinations of either propionic acid, butyric acid, octanoic acid, decanoic acid, oleic acid, linoleic acid, sodium benzoate, calcium propionate, sodium oleate or ethyl oleate were subjected to MIC determinations in mycophil broth with Isothiazolone B. Under the conditions of the test method, none of the above combinations showed synergy. In fact some combinations were antagonistic.

**Claims**

1. A composition comprising 4,5 dichloro-2-n-octyl-3-isothiazolone and a fatty acid compound of the formula $C_nH_{2n+1}CO_2H$ where n is an integer from 2 to 9 in a ratio of from 0.001:100 to 10:100, preferably from 0.01:100 to 1:100.

2. Composition according to claim 1 wherein the fatty acid is propionic acid, butyric acid, octanoic acid or decanoic acid.

3. Composition according to claim 1 or 2 wherein the fatty acid is propionic acid and the ratio of isothiazolone to acid is from 0.01:100 to 1:200.

4. Composition according to claim 1 or 2 wherein the fatty acid is butyric acid and the ratio of isothiazolone to acid is from 0.01:100 to 1:200.

5. Composition according to claim 1 or 2 wherein fatty acid is octanoic acid and the ratio of isothiazolone to acid is from 0.01:100 to 1:500.

6. Composition according to claim 1 or 2 wherein fatty acid is decanoic acid and the ratio of isothiazolone to acid is from 0.01:100 to 0.1:100.

7. Composition according to any preceding claim, further comprising an inert or agronomically or pharmaceutically acceptable carrier, and preferably wherein the isothiazolone and fatty acid together comprise from 0.2 to 10 percent by weight of the composition.

8. Composition according to claim 7, which is a coating or impregnant composition or a pharmaceutical composition each comprising from 0.1 ppm to 2 percent by weight of isothiazolone and fatty acid together, or a marine antifoulant composition comprising from 1 to 10 percent by weight of isothiazolone and fatty acid together.

9. A method of inhibiting or preventing the growth of bacteria, fungi, or algae in a locus subject or susceptible to contamination thereby, which comprises incorporating onto or into the locus, in an amount which is effective to adversely affect said growth, a composition according to any preceding claim.

10. Method according to claim 9 wherein the locus is an aqueous medium, cosmetic formulation or fuel system and the composition is used in an amount from 0.1 ppm to 1 percent by weight, or the locus is a coating or impregnant composition, metal working fluid, fabric, paper, leather or wood, or a pharmaceutical formulation and the composition is used in an amount from 0.1 ppm to 2 percent by weight, or the locus is a marine antifoulant composition and the composition is used in an amount from 1 to 10 percent by weight, or the locus is a pulp or paper manufacturing process or cooling tower water and the composition is used in an amount from 0.1 to 1000 ppm by weight.

EP 0 488 606 A1

**European Patent Office**

# EUROPEAN SEARCH REPORT

Application Number

EP 91 31 0793

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | EP-A-0 305 065 (CLOROX COMPANY)<br>* page 5, line 1 - line 16 *<br>* claims 1,4,7 *<br>--- | 1-10 | A01N43/80<br>B27K3/50<br>A01N37/02 |
| P,X | EP-A-0 425 143 (ROHM AND HAAS COMPANY)<br>*the whole document*<br>--- | 1-10 | |
| A | EP-A-0 349 786 (ICHIKAWA GOSEI CHEMICAL CO.)<br>* page 5, line 11 - line 14 *<br>* claims 1-6 *<br>--- | 1-10 | |
| A | US-A-4 783 221 (SCOTT L. GROVE)<br>----- | | |
| | | | **TECHNICAL FIELDS SEARCHED (Int. Cl.5)**<br><br>A01N<br>B27K |

The present search report has been drawn up for all claims

| Place of search | Date of completion of the search | Examiner |
|---|---|---|
| THE HAGUE | 18 MARCH 1992 | DALKAFOUKI A. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document